# FASCICULE DE BREVET EUROPEEN

(11) **EP 4 153 894 B1**
(45) Date de publication et mention de la délivrance du brevet: **31.07.2024**
(21) Numéro de dépôt: 21727845.6
(22) Date de dépôt: 20.05.2021
(51) Int. Cl.: F16L 21/03, F16L 37/084

(54) **ASSEMBLAGE ETANCHE ET VERROUILLE**
ABGEDICHTETE UND VERRIEGELTE ANORDNUNG
SEALED AND LOCKED ASSEMBLY

(30) Priorité: 20.05.2020 FR 2005327
(43) Date de publication de la demande: 29.03.2023
(73) Titulaire: Saint-Gobain Pam Canalisation, 54700 Pont-à-Mousson (FR)
(72) Inventeur: ALEXANDRE, Pascal, 54200 TOUL (FR); GENELOT, Pierre, 54700 NORROY LES PONT A MOUSSON (FR); RENARD, Philippe, 54710 FLEVILLE DEVANT NANCY (FR); BRIDARD, Jérôme, 54830 GERBEVILLER (FR); BERETTA, Marc, 57680 NOVEANT SUR MOSELLE (FR)
(74) Mandataire: Lavoix
(86) Numéro de dépôt international: PCT/EP2021/063504
(87) Numéro de publication internationale: WO 2021/234105

(56) Documents cités:
- EP-A1- 0 433 202
- EP-A1- 0 526 373
- EP-A1- 0 596 394
- FR-A1- 2 966 554
- US-A- 4 229 026
- US-A1- 2005 218 605
- US-A1- 2005 275 217

## Description

La présente invention concerne un assemblage étanche et verrouillé selon le préambule de la revendication 1.

Elle s'applique notamment aux assemblages étanches et verrouillés de deux tuyaux en fonte.

Le document EP-A-526 373 décrit une garniture d'étanchéité composite comprenant un corps d'étanchéité et un talon d'ancrage en matière élastique ainsi qu'une pluralité d'inserts de verrouillage en matériau rigide noyés dans le talon d'ancrage.

L'inclinaison de chaque insert de verrouillage lors de son arc-boutement entre le bout uni et le bout à emboîtement est fonction du jeu entre le diamètre externe du bout uni et le diamètre interne du bout à emboîtement. L'accrochage de l'insert sur le bout uni induit une force de réaction dont l'angle d'inclinaison sur la direction médiane varie en fonction du jeu présent entre les bouts assemblés.

Plus cet angle de réaction, mesuré par rapport à la direction radiale, est élevé plus le verrouillage résiste à la pression interne du fluide circulant à travers l'assemblage. Par contre, l'accrochage des inserts dans la surface externe du bout uni est d'autant meilleur que cet angle de réaction est faible. En effet, si l'angle est trop élevé, les dents des inserts risquent de ne pas accrocher le bout uni lors de la mise en pression, et de glisser sur celui-ci en engendrant un verrouillage déficient.

Le risque d'avoir une mauvaise tenue en pression est critique vers les jeux maximaux où l'angle de réaction est naturellement faible, tandis que le risque d'avoir un mauvais accrochage des inserts est critique vers les jeux minimaux où cet angle de réaction est naturellement élevé.

En conséquence, la position de l'insert de verrouillage par rapport au bout uni et au bout à emboîtement doit être définie pour tout jeu admis par des tolérances de fabrication entre la gorge d'ancrage du bout à emboîtement et le bout uni. Or, dans la gamme des tolérances admises et notamment vers les jeux maximaux, l'insert de verrouillage de EP-A-526 373 occupe une position telle que l'angle de réaction par rapport à la direction radiale est relativement faible lorsque les tuyaux sont soumis à la pression du fluide transporté, ce qui nécessite d'utiliser un nombre élevé d'inserts pour réduire l'effort de verrouillage sur chaque insert pris isolément et éviter ainsi de perforer le bout uni aux pressions les plus élevées admissibles.

On connaît aussi du document FR 2 966 554 ou WO201256163 un insert de verrouillage qui là-encore et plus particulièrement vers les jeux maximaux, présente un angle de réaction relativement faible par rapport à la direction radiale, ce qui nécessite également de prévoir un nombre élevé d'inserts de verrouillage pour ne pas risquer de perforer le bout uni aux pressions les plus élevées.

Pour une épaisseur de tuyau donnée, les performances des jonctions tubulaires verrouillées sont, entre autres, fonction du nombre d'inserts et de l'angle d'incidence des inserts sur la paroi du tuyau à bout uni, c'est-à-dire de l'angle d'inclinaison sur la direction médiane : plus l'angle d'incidence est élevé, plus les efforts de poinçonnement ou de perforation sont élevés et plus le nombre d'inserts doit être important pour atteindre les performances souhaitées en matière de tenue à la pression.

Par exemple, pour un tuyau en fonte de diamètre nominal DN200 et de classe de pression C40 selon la norme EN 545, il est nécessaire d'utiliser une garniture d'étanchéité composite équipée de 18 inserts conformes à ceux décrits dans FR 2 966 554 pour atteindre les performances souhaitées, notamment en matière de tenue en pression.

Un but de l'invention est donc de concevoir un insert de verrouillage et une jonction tubulaire correspondante qui permettent un bon accrochage de l'insert sur le bout uni ainsi qu'une bonne tenue en pression de la jonction verrouillée, tout en étant économique à fabriquer.

Le cout des garnitures d'étanchéité est d'une manière prépondérante proportionnel au nombre d'inserts. La présente invention vise donc un insert de verrouillage, qui permette un accrochage suffisant entre le bout uni et le bout à emboîtement avec un nombre réduit d'inserts de verrouillage.

A cet effet, l'insert de verrouillage selon l'invention permet d'assurer un angle d'incidence relativement faible.

Un autre but de l'invention est d'optimiser le compromis entre la fiabilité d'accrochage de l'insert sur le bout uni et la tenue en pression du verrouillage.

Il est dévoilé un insert de verrouillage tel qu'indiqué ci-dessus, caractérisé en ce que la tête comporte une dent de butée, adaptée pour s'appliquer sur le creux de raccordement lorsque le pied s'accroche sur la surface extérieure du bout uni.

Selon des modes particuliers de réalisation, l'insert de verrouillage comprend l'une ou plusieurs des caractéristiques suivantes :
- la dent de butée, selon une vue de côté, a un angle d'ouverture compris entre 35° et 55°, en particulier entre 40° et 50° et de préférence entre 42 et 47° ;
- la dent de butée a un rayon de courbure inférieur à 1 mm, et de préférence inférieur à 0,5 mm ;
- selon une vue de côté, la dent de butée, la première dent d'accrochage et la saillie radiale forment un angle d'accrochage entre elles qui est compris entre 30° et 50°, et qui est de préférence entre 35° et 45 ;
- selon une vue de côté, la première dent d'accrochage, la dent de butée, et la saillie radiale forment un angle de butée entre elles qui est compris entre 55° et 70°, et qui est de préférence compris entre 60° et 70° ;
- la dent de butée et la première dent d'accrochage, selon une vue de côté, sont reliées par un profil convexe ou rectiligne, notamment par un profil comprenant, ou étant constitué de, deux lignes droites ; et
- la dent de butée et la saillie radiale sont, selon une vue de côté, reliées par un profil concave ou rectiligne, notamment par un profil concave ayant une seule portion concave.

Il est également dévoilé une garniture d'étanchéité composite pour l'assemblage étanche et verrouillé entre un bout uni d'un premier élément de canalisation et un bout à emboîtement d'un second élément de canalisation, comprenant
- un anneau en matière élastique s'étendant selon un axe central, ayant un corps de garniture et un talon d'ancrage, et
- au moins un insert de verrouillage noyé au moins partiellement dans le corps de garniture,
caractérisée en ce que chaque insert de verrouillage est un insert tel que défini ci-dessus, en ce que la tête est une tête radialement extérieure, noyée au moins partiellement dans le corps de garniture et destinée à s'étendre dans la gorge d'ancrage du bout à emboîtement, et en ce que le pied est un pied radialement intérieur, destiné à s'appliquer contre le bout uni.

Selon des modes particuliers de réalisation, la garniture d'étanchéité comprend l'une ou plusieurs des caractéristiques suivantes :- le talon d'ancrage est en une matière ayant une dureté supérieure à la dureté de la matière du corps de garniture.

L'invention a pour objet un assemblage étanche et verrouillé selon les caractéristiques techniques de la revendication 1. Des modes de réalisation avantageux de l'assemblage étanché et verrouillé selon l'invention font l'objet des revendications dépendantes.

L'invention sera mieux comprise à la lecture de la description qui va suivre, donnée uniquement à titre d'exemple et faite en se référant aux dessins annexés, sur lesquels :
[Fig 1] La Figure 1 est une demi-vue en coupe méridienne d'un assemblage de deux tuyaux et d'une garniture d'étanchéité composite interposée entre eux, avant réalisation de l'assemblage verrouillé selon l'invention ;
[Fig 2] La Figure 2 est une vue en coupe méridienne d'une garniture d'étanchéité utilisée dans un assemblage étanche et verrouillé selon l'invention ;
[Fig 3] La Figure 3 est une vue en coupe méridienne d'une partie de l'assemblage selon l'invention, le bout à emboîtement et le bout uni définissant un jeu minimal entre eux,
[Fig 4] La Figure 4 est une vue en coupe méridienne d'une partie de l'assemblage selon l'invention, le bout à emboîtement et le bout uni définissant un jeu maximal entre eux,
[Fig 5] La Figure 5 est une vue en coupe méridienne d'une partie de l'assemblage selon l'invention, le bout à emboîtement et le bout uni définissant un jeu moyen entre eux, et
[Fig 6] La Figure 6 est une vue en coupe méridienne d'une partie de l'assemblage selon l'invention, le bout à emboîtement et le bout uni étant représentés lors de l'introduction du bout uni dans le bout à emboîtement.

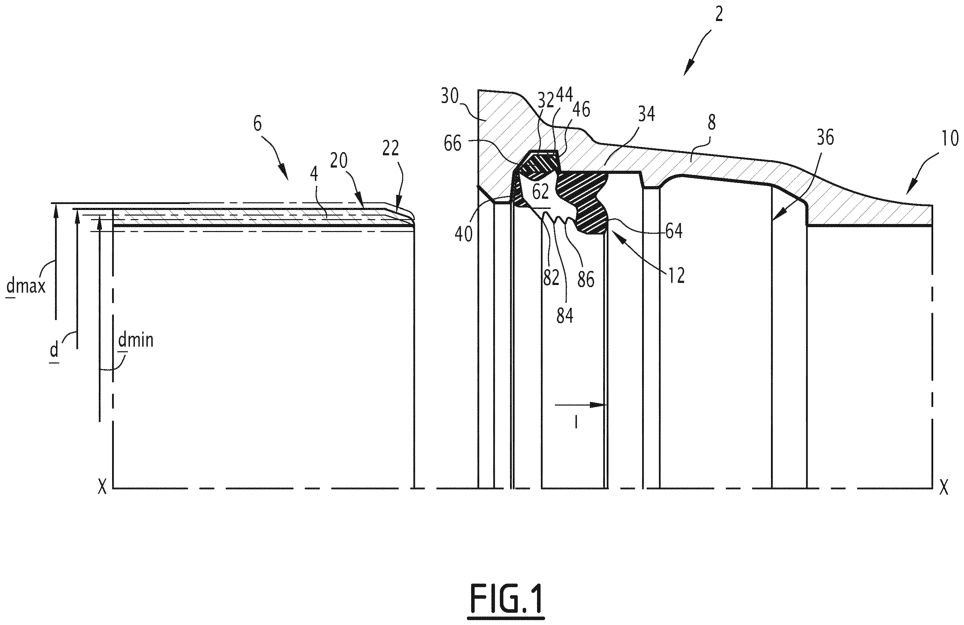

Sur la Figure 1 est représenté un assemblage étanche et verrouillé selon l'invention, désigné par la référence générale 2.

L'assemblage 2 comprend un bout uni 4 ou bout mâle solidaire d'un premier tuyau 6, un bout à emboîtement 8 ou bout femelle solidaire d'un second tuyau 10, et une garniture d'étanchéité composite 12.

L'assemblage 2 s'étend suivant un axe central X-X. Dans ce qui suit, les expressions « radialement », « axialement », « circonférentiellement » et « méridienne » seront utilisées par rapport à cet axe. Le terme « proximal » se réfère à une position axialement proche de l'entrée du bout à emboîtement et le terme « distal » se réfère à une position axialement éloignée de l'entrée et vers l'intérieur du bout à emboîtement (voir ci-après).

L'assemblage définit un sens d'introduction I du bout uni 4 dans le bout à emboîtement 8.

Le bout uni 4 comprend une surface extérieure cylindrique 20 de diamètre d munie d'un chanfrein d'entrée 22. Le bout uni 4 est fabriqué avec des tolérances diamétrales de telle sorte que le diamètre d réel peut être situé entre un diamètre extérieur maximal dmax et un diamètre extérieur minimal dmin. Les diamètres dmax et dmin sont indiqués en traits mixtes sur la Figure 1.

Le bout à emboîtement 8 comporte successivement, en allant axialement de l'entrée de l'emboîtement vers le fond, un collet d'entrée 30, une gorge d'ancrage annulaire 32, une partie étagée 34 et une cavité de réception 36, adaptée pour recevoir librement l'extrémité du bout uni 4.

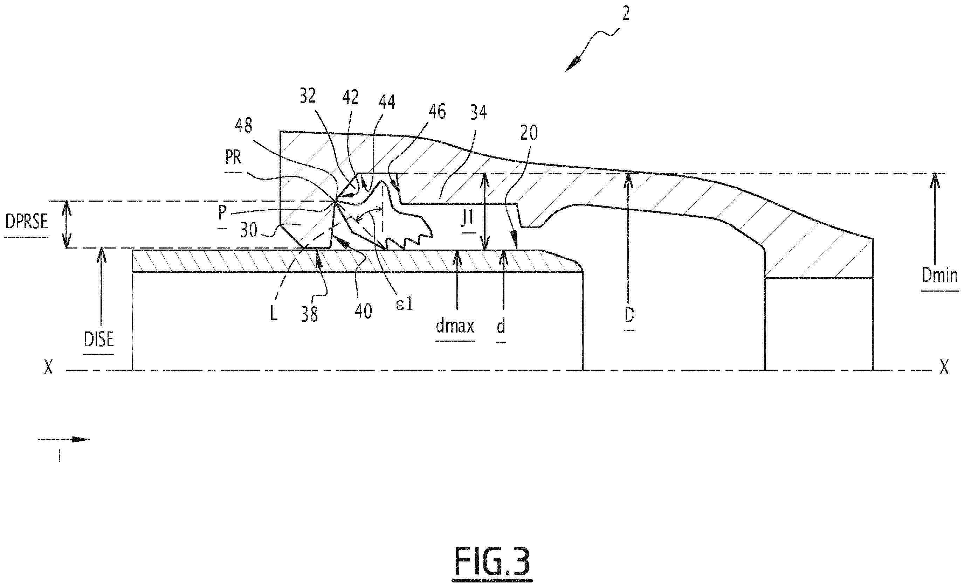

Le collet d'entrée 30 délimite une surface d'entrée 38, qui est une surface cylindrique de diamètre DISE (cf. Figure 3).

La gorge d'ancrage 32 annulaire est délimitée par une surface frontale annulaire 40 du collet d'entrée 30, par une surface inclinée 42, par une surface de fond cylindrique 44 à section circulaire d'axe X-X, ainsi que par une surface frontale 46 de la partie étagée 34.

La surface frontale 46 est dirigée vers le collet d'entrée 30, à l'encontre du sens I.

De manière générale, la surface frontale 40 s'étend suivant un angle d'au moins 80° par rapport à l'axe central X-X et a une composante axiale dirigée dans le sens I. De préférence, la surface frontale 40 réalise un angle d'au moins 85° avec l'axe centrale X-X. La surface frontale 40 s'étend depuis la surface d'entrée 38 jusqu'à la surface inclinée 42.

La surface inclinée 42 s'étend suivant un angle compris entre 30° et 60° par rapport à l'axe central X-X et a une composante axiale dirigée dans le sens I. La surface inclinée 42 est donc disposée radialement et axialement entre la surface de fond 44 et la surface frontale 40.

Par ailleurs, la surface frontale 40 se raccorde directement à la surface inclinée 42 et ces deux surfaces 40, 42 forment un creux de raccordement 48.

La surface inclinée 42 se raccorde directement à la surface de fond 44. En vue méridienne, la surface frontale annulaire 40 se raccorde à la surface inclinée 42 en un point de raccordement PR et forme à cet emplacement le creux de raccordement 48. Ce point de raccordement PR est situé à une distance DPRSE de la surface d'entrée 38, distance qui est comprise entre 1 0% et 90% de la différence entre le diamètre de la surface d'entrée DISE et le diamètre D de la surface de fond 44. De préférence, la distance DPRSE est comprise entre 40% et 60% de cette différence ou entre 45% et 55% de cette différence.

Le creux de raccordement 48, en vue méridienne, a un rayon de courbure de l'ordre de 1 mm et de préférence inférieur à 0,5 mm.

En coupe méridienne, l'angle γ entre les surfaces frontale 40 et inclinée 42 est inférieur à 180° et est notamment compris entre 110° et 160°. L'angle d'inclinaison de la surface inclinée 42 par rapport à l'axe X-X est par exemple compris entre 30° et 60°.

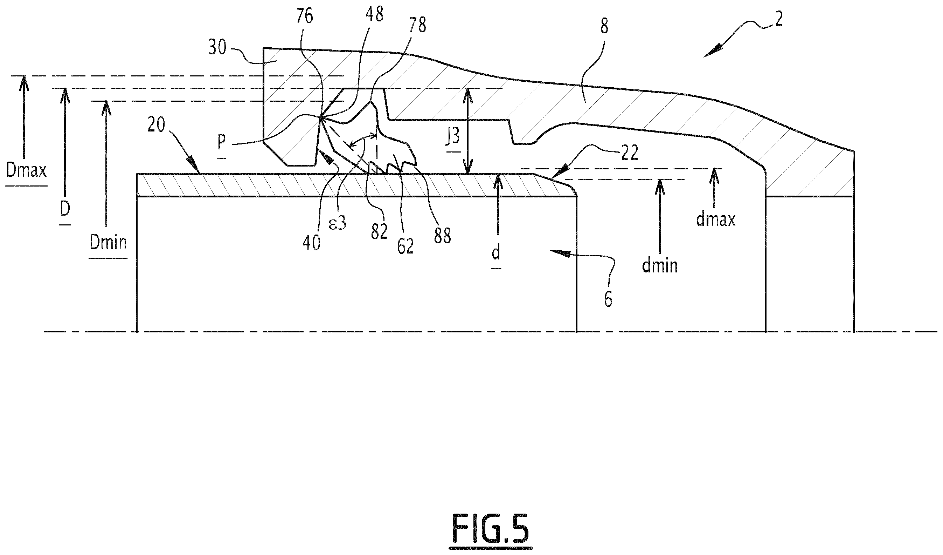

Comme indiqué sur la Figure 5, la surface de fond 44 est également soumise à des tolérances de fabrication, de telle sorte que son diamètre D réel peut varier entre un diamètre maximal Dmax et un diamètre minimal Dmin.

Il est à noter que le diamètre maximal dmax de la surface 20 est inférieur au diamètre DISE de la surface 38.

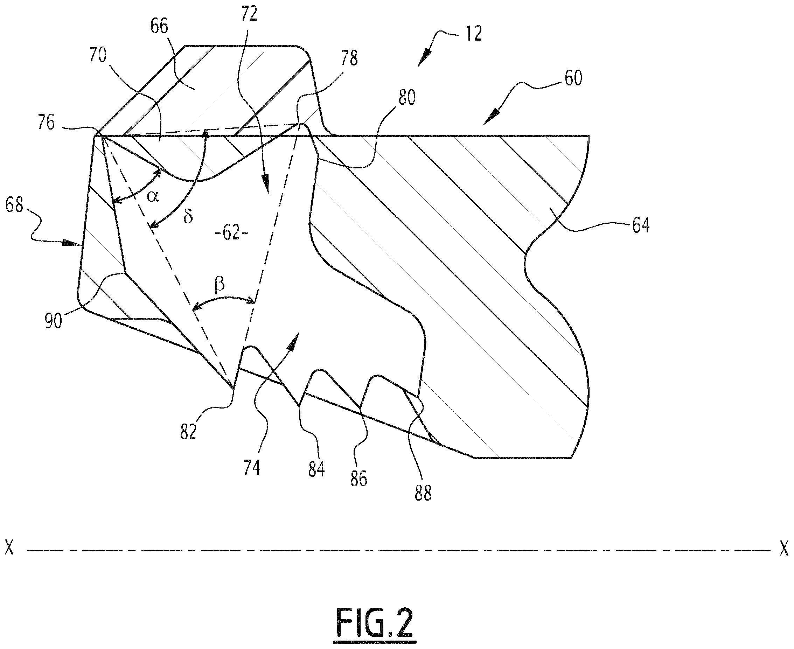

La garniture d'étanchéité 12 comporte, en section méridienne, un anneau élastique 60 réalisé en matériau souple ou résilient, par exemple en élastomère, qui s'étend selon l'axe central X-X, dans lequel sont noyés une pluralité d'inserts de verrouillage 62. (Figure 2)

L'anneau élastique 60 comprend un corps de garniture 64 massif annulaire, s'étendant à l'état verrouillé de la jonction tubulaire vers le fond de l'emboîtement, ainsi que, situé du côté de l'entrée de l'emboîtement, un talon d'ancrage 66 en saillie radialement vers l'extérieur par rapport au corps de garniture 64.

Le corps de garniture 64 a une forme s'évasant dans la direction axiale X-X du côté du talon d'ancrage 66 vers le côté distal. En coupe méridienne, le corps de garniture 64 est donc sensiblement en forme de V ouvert vers le côté distal.

Le talon d'ancrage 66 a une forme complémentaire de celle de la gorge d'ancrage 32, ou en tout cas des surfaces 42, 44 et 46, et s'applique, à l'état monté, entièrement sur la surface inclinée 42, la surface de fond 44, et la surface frontale 46. La gorge d'ancrage sert donc de logement au talon d'ancrage 66 de la garniture d'étanchéité.

Le corps de garniture 64 a une surface frontale 68 s'appliquant, à l'état monté, contre la surface frontale 40 annulaire.

Le talon d'ancrage 66 est en une matière ayant une dureté supérieure à la dureté de la matière du corps de garniture 64.

Le talon d'ancrage 66 et le corps de garniture 64 sont séparés l'un de l'autre par une zone d'interface 70, qui est en l'occurrence sensiblement cylindrique d'axe X-X.

Le corps de garniture 64 est par exemple fabriqué en élastomère ayant une dureté Shore A comprise entre 50° Shore et 70° Shore, et de préférence d'environ 60° Shore. Le talon d'ancrage 66 est par exemple fabriqué en élastomère ayant une dureté Shore A comprise entre 70° Shore et 90° Shore, et de préférence d'environ 80° Shore.

Les inserts de verrouillage 62 sont régulièrement répartis sur tout le pourtour de l'anneau élastique 60. Chaque insert de verrouillage 62 est en matériau de grande dureté, par exemple en alliage métallique dur ou en céramique.

Chaque insert de verrouillage 62 comprend, en vue méridienne, une tête 72 radialement extérieure et un pied 74 radialement intérieur. La tête 72 s'étend sensiblement radialement par rapport à l'axe X-X, tandis que le pied 74 est incliné par rapport à cet axe, de telle sorte qu'il converge vers l'axe X-X. L'insert de verrouillage 62 présente ainsi un profil coudé.

Chaque insert de verrouillage 62 est noyé partiellement dans le corps de garniture 64 et recouvert partiellement par la matière élastique du corps de garniture.

Comme on le voit plus précisément sur la Figure 2, la tête 72 comprend à son extrémité radialement extérieure et du côté proximal un profilé formant une dent de butée 76, adaptée pour s'appliquer sur le creux de raccordement 48 lorsque le pied 74 s'accroche sur la surface extérieure 20 du bout uni.

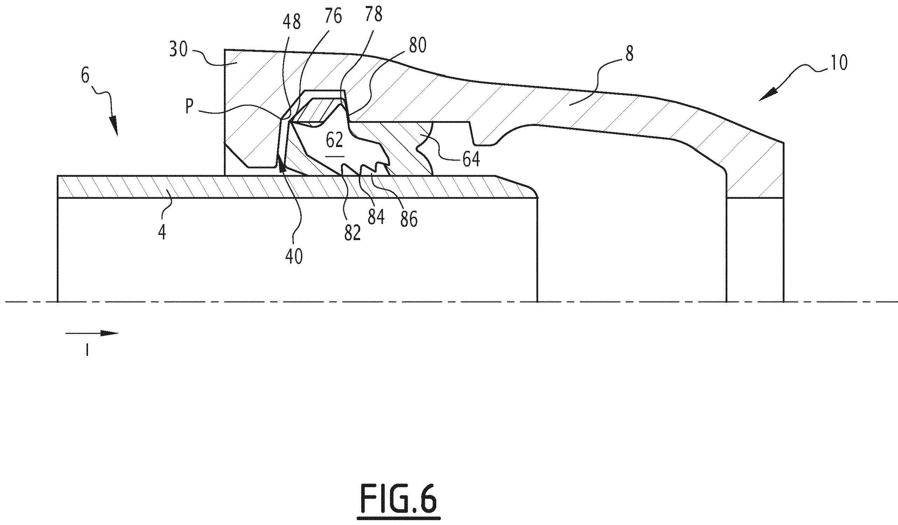

Du côté distal, la tête 72 comprend en outre une saillie radiale 78 munie d'un bec de retenue 80 dirigé axialement dans le sens d'introduction I et adapté pour s'appuyer sur la surface frontale 46, via le talon d'ancrage 66, lors de l'insertion du bout uni dans le bout à emboîtement (Figure 6) et empêcher ainsi l'insert d'être extrudé en dehors de la gorge d'ancrage 32 vers l'intérieur du bout à emboîtement. A cet effet, la saillie radiale 78 s'étend partiellement dans le talon d'ancrage.

Par ailleurs, le pied 74 comprend à son extrémité radialement intérieure trois dents d'accrochage, à savoir une première 82, une deuxième 84, et une troisième 86 dent d'accrochage, décalées l'une de l'autre axialement, qui sont adaptées pour s'accrocher sur la surface extérieure 20 du bout uni 4 (voir ci-après) et qui, lorsque la garniture d'étanchéité est à l'état de repos, s'étendent en dehors de l'anneau élastique 60. En vue méridienne, les dents d'accrochage 82, 84, 86 s'étendent sur une courbe convexe. Par ailleurs, le pied 74 comporte, du côté distal, une butée d'accrochage 88, noyée dans le corps de garniture et qui a pour fonction de limiter la pénétration de l'insert dans le bout uni afin de ne pas détériorer celui-ci. La butée d'accrochage 88 a, en vue méridienne, un profil qui est arrondi par rapport au profil des dents d'accrochage 82, 84, 86.

La dent de butée 76, vue en coupe méridienne (Figure 2), a un angle d'ouverture (α) compris entre 35° et 55°, en particulier entre 40° et 50° et de préférence entre 42° et 47°.

La dent de butée 76, vue en coupe méridienne, a un rayon de courbure inférieur à 1 mm, et de préférence inférieur à 0,5 mm. La dent de butée est donc de préférence à arête vive.

La dent de butée 76 a un rayon de courbure inférieur au rayon de courbure du creux de raccordement 48.

La dent de butée 76 et le creux de raccordement 48 ont des profils tel que, vue de côté, la dent de butée 76 ne s'applique qu'en un seul point sur le creux de raccordement 48 ou sur le bout à emboîtement.

Vue en coupe méridienne, la dent de butée 76, la première dent d'accrochage 82 et la saillie radiale 78 forment un angle d'accrochage β. Cet angle d'accrochage est l'angle entre, d'une part la ligne s'étendant entre la première dent d'accrochage 82 et la dent de butée 76 et d'autre part la ligne s'étendant entre la première dent d'accrochage 82 et la saillie radiale 78.

L'angle d'accrochage β est compris entre 30° et 50° et de préférence compris entre 35° et 45°.

Vue en coupe méridienne, la première dent d'accrochage 82, la dent de butée 76 et la saillie radiale 78 forment un angle de butée δ entre elles. Cet angle de butée δ est l'angle entre, d'une part la ligne s'étendant entre la dent de butée 76 et la saillie radiale 78 et d'autre part la ligne s'étendant entre la dent de butée 76 et la première dent d'accrochage 82. Cet angle de butée est compris entre 55° et 70°, et est de préférence compris entre 60° et 70°.

La tête 72 comprend une saillie frontale 90 radialement décalée de la dent de butée 76 vers l'axe central X-X. La dent de butée 76 et la première dent d'accrochage 82 sont, selon une vue de côté, reliées par un profil convexe formant cette saillie frontale 90. Notamment ce profil comprend ou est constitué de deux lignes droites. En variante, ce profil peut être rectiligne.

La dent de butée 76 et la saillie radiale 78 sont, en coupe méridienne, reliées par un profil concave et en l'occurrence par un profil concave ayant une seule portion concave. En variante, ce profil est rectiligne.

La dent de butée 76 peut être légèrement noyée dans la garniture d'étanchéité. La zone de transition 70 peut être située au niveau de la dent de butée 76

Pour tout jeu entre les surfaces extérieure 20 et de fond 44 compris dans la gamme des tolérances de fabrication admises, l'insert de verrouillage 62 s'applique avec la dent de butée 76 dans le creux de raccordement 48 du bout à emboîtement et notamment lorsque les tuyaux sont soumis à la pression interne du fluide qu'ils véhiculent.

Plus précisément, lorsque le jeu entre les surfaces 20 et 44 est situé dans une première gamme de jeux délimité par le jeu minimal J1 (Fig. 3) et un jeu intermédiaire, l'insert de verrouillage 62 s'applique dans le creux de raccordement 48 et la première dent d'accrochage 82 et / ou la seconde dent d'accrochage 84 s'accroche(nt) sur la surface 20.

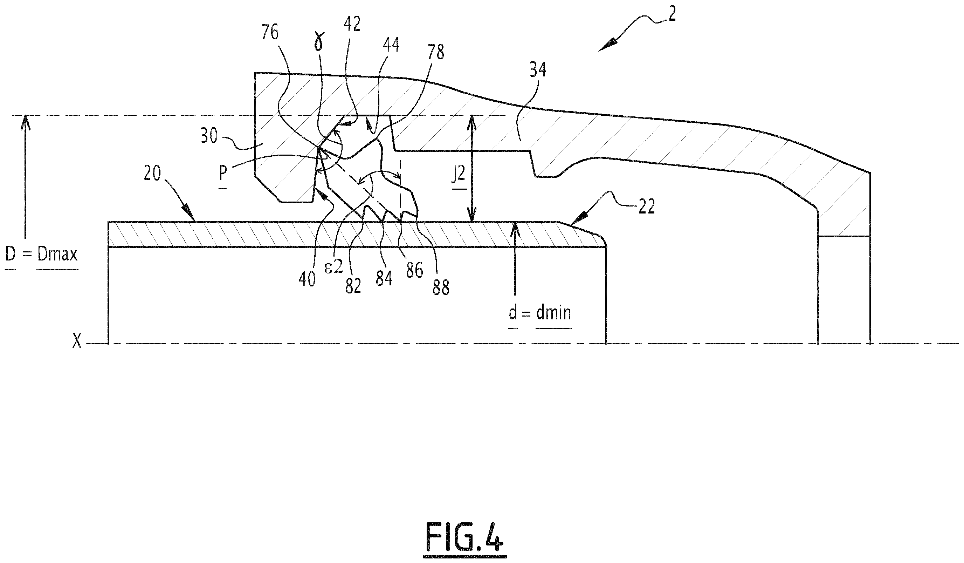

Lorsque le jeu entre les surfaces 20 et 44 est situé dans une deuxième gamme de jeux, délimité par le jeu intermédiaire et le jeu maximal J2 (Fig. 4) , l'insert de verrouillage 62 s'applique dans le creux de raccordement 48 et la seconde dent d'accrochage 84 et / ou la troisième dent d'accrochage 86 s'accroche(nt) sur la surface 20.

Indépendamment du jeu entre les surfaces extérieure 20 et de fond 44, pour autant qu'il soit situé dans la gamme des tolérances de fabrication admises, en vue méridienne, l'angle de réaction ε varie peu et est toujours situé entre 20° et 45°. Cet angle de réaction est mesuré entre un plan perpendiculaire à l'axe X-X et la ligne servant de support à la force de réaction de l'insert, cette ligne reliant le point d'application de la dent de butée 76 sur le bout à emboîtement au point d'application de la dent d'accrochage sur le bout uni ou au point médian d'application des dents d'accrochage sur le bout uni dans le cas où plusieurs dents sont sollicitées.

L'angle de réaction est génériquement appelé ε et est dans les exemples présentés sur les Figures désigné ε1, ε2 et ε3.

Le montage de l'assemblage selon l'invention est effectué de la manière suivante.

La garniture d'étanchéité 12 est tout d'abord introduite dans le bout à emboîtement 8, le corps de garniture 64 s'appliquant contre la partie étagée 34 et le talon d'ancrage 66 prenant place dans la gorge d'ancrage 32 annulaire, de telle sorte que l'axe de la garniture d'étanchéité est confondu avec celui du bout à emboîtement.

Puis le bout uni 4 est introduit à travers la garniture d'étanchéité 12 selon le sens I jusqu'à ce que son chanfrein 22 arrive à proximité du fond de la cavité 36. Lors de l'introduction du bout uni et comme visible sur la Figure 6, le bec de retenue 80 de la saillie radiale 78 s'accroche sur la surface frontale 46 de la partie étagée 34, empêchant ainsi l'insert d'être extrudé en dehors de la gorge d'ancrage 32 vers l'intérieur du bout à emboîtement. De plus, durant l'insertion du bout uni, le talon d'ancrage 66 exerce sur la saillie radiale 78 une force tendant à repousser l'insert radialement vers l'intérieur et à le plaquer contre le bout uni, facilitant ainsi l'accrochage de l'insert sur le bout uni lors de la mise en pression.

Le talon d'ancrage 66, réalisé en matière élastomère plus dure que le corps 64, a plus généralement pour fonction de s'opposer à l'expulsion de la garniture d'étanchéité 12 en dehors de la gorge d'ancrage 32 lors de l'introduction du bout uni dans le bout à emboîtement, tandis que le corps 64 en matière élastomère plus souple est plus facilement déformable, ce qui facilite l'insertion du bout uni.

Ensuite, à la mise en pression, le bout uni 4 est ramené axialement en arrière, provoquant le rebroussement des inserts de verrouillage 62. Les inserts de verrouillage 62 modifient leur inclinaison par rapport à l'axe X-X par un débattement angulaire inverse du précédent et de faible amplitude. Lors de ce rebroussement, la dent de butée 76 vient en appui contre le bout à emboîtement au niveau du creux de raccordement 48 et au moins une des dents 82, 84, 86 s'accroche sur la surface externe du bout uni 4. L'arc-boutement de l'insert entre ces deux appuis offre alors une sensible résistance à la continuation du mouvement axial de retrait du bout uni 4. Le verrouillage de l'assemblage est ainsi réalisé.

Le talon d'ancrage 66 en matière élastomère relativement dure exerce sur la dent de butée 76 une force qui s'oppose à un déplacement de la dent de butée 76 par glissement le long de la surface inclinée 42, assurant ainsi, lors de la mise en pression, le positionnement et le maintien de la dent de butée 76 dans le creux de raccordement 48 de la gorge d'ancrage.

De plus, lors de la mise en pression, la saillie radiale 78 de l'insert de verrouillage n'est pas en contact avec la surface de fond 44. La partie du talon d'ancrage s'étendant entre la saillie radiale 78 et la surface de fond 44 agit alors comme un ressort de rappel en exerçant sur la saillie radiale 78 une force dirigée radialement vers l'intérieur qui favorise l'accrochage des dents dans le bout uni et maintient l'insert plaqué contre le bout uni une fois la pression établie. Cette force est d'autant plus élevée que le talon d'ancrage est réalisé en matière élastomère dure, facilitant ainsi la pénétration et le maintien en place des dents d'accrochage dans le bout uni.

Par la suite, en se référant aux Figures 3 et 4, il sera décrit le fonctionnement de la garniture d'étanchéité 12 selon l'invention en fonction des tolérances diamétrales sur les diamètres d et D sous l'action du fluide sous pression. Sur ces Figures, l'anneau élastique 60 a été omis pour une meilleure clarté de représentation.

Après le débattement angulaire précité des inserts lors de l'assemblage des tuyaux 6 et 10, chaque insert de verrouillage prend une position d'inclinaison qui varie en fonction du jeu présent entre les diamètres d et D.

Sur la Figure 3 est représentée la position d'un insert de verrouillage 62 lors de l'accrochage sur le bout uni 4 à la mise en pression dans le cas où le jeu entre les tuyaux est un jeu minimal J1. A cet effet, le bout à emboîtement 8 comprend une gorge d'ancrage 32 dont le diamètre D correspond au diamètre minimal Dmin, tandis que le bout uni 4 a une surface extérieure dont le diamètre extérieur d correspond au diamètre maximal dmax. Les deux diamètres Dmin et dmax définissent ainsi un jeu J1 minimal entre les deux surfaces.

On voit que, lors de l'accrochage sur le bout uni 4, et en vue méridienne, l'insert de verrouillage 62 s'applique en un seul point contre le bout à emboîtement, à savoir avec la dent de butée 76 dans le creux de raccordement 48. De plus, seule la dent d'accrochage la plus proche de l'entrée d'emboîtement, à savoir la première dent d'accrochage 82, s'applique contre la surface extérieure 20 du bout uni.

L'insert de verrouillage 62 est incliné suivant un angle de réaction qui est défini de la manière suivante. L'insert de verrouillage 62 s'appuie sur le creux de raccordement 48 en un point P qui coïncide avec le point de raccordement PR. Le point d'application de la dent d'accrochage 82 sur la surface 20 du bout uni 4 définit avec le point P une ligne L servant de support à la force de réaction de l'insert de verrouillage 62. L'angle ε1 mesuré entre cette ligne L et un plan perpendiculaire à l'axe X-X est appelé « angle de réaction » à l'accrochage.

La Figure 4 montre un assemblage analogue à celui de la Figure 3 avec les différences suivantes.

La gorge d'ancrage 32 a un diamètre correspondant au diamètre maximal Dmax, tandis que la surface extérieure 20 du bout uni a un diamètre minimal dmin, de telle sorte que ces deux surfaces définissent entre elles un jeu J2 qui est supérieur au jeu J1. Ce jeu J2 est le jeu maximal admis pour des tolérances de fabrication du bout uni 4 et du bout à emboîtement 8.

On voit que, lors de l'accrochage sur le bout uni 4, l'insert de verrouillage 62 s'applique également en un seul point contre le bout à emboîtement, à savoir avec la dent de butée 76 dans le creux de raccordement 48. De plus, seule la dent d'accrochage la plus éloignée de l'entrée d'emboîtement, à savoir la troisième dent d'accrochage 86, s'applique contre la surface extérieure du bout uni.

L'angle de réaction à l'accrochage ε2 obtenu est mesuré entre la direction radiale et une ligne L passant par le point P, sensiblement identique à celui de l'assemblage de la Figure 3, et par le point de contact entre la surface extérieure du bout uni et la troisième dent 86. Cet angle ε2 est essentiellement identique à l'angle ε1 et les caractéristiques de l'accrochage sont donc analogues de celles du cas de la Figure 3.

La Figure 5 montre une vue en coupe méridienne d'une partie de l'assemblage selon l'invention, le bout à emboîtement et le bout uni définissant un jeu moyen J3 entre eux. On voit que, lors de l'accrochage sur le bout uni 4, l'insert de verrouillage 62 s'applique également en un seul point contre le bout à emboîtement, à savoir avec la dent de butée 76 dans le creux de raccordement 48. De plus, les deux dents d'accrochage proximales 82, 84 s'appliquent contre la surface extérieure du bout uni.

L'angle de réaction à l'accrochage ε3 obtenu est mesuré entre la direction radiale et une ligne L passant par le point P, sensiblement identique à celui de l'assemblage des Figures 3 et 4, et par le point situé sur la surface extérieure du bout uni, approximativement à mi-distance entre les deux dents d'accrochage 82, 84.

On voit qu'également dans ce cas, l'angle de réaction ε3 est essentiellement identique à l'angle ε1 et à l'angle ε2.

La Figure 6 est une vue en coupe méridienne d'une partie de l'assemblage selon l'invention, le bout à emboîtement et le bout uni étant représentés lors de l'introduction du bout uni dans le bout à emboîtement. La forme de l'insert de verrouillage 62 ainsi que la partie du talon d'ancrage en élastomère plus dur s'étendant entre la saillie radiale 78 et la surface de fond 44 évitent un basculement excessif dans le sens antihoraire sur la Figure et assurent donc un positionnement correct de la dent de butée 76 lors de la mise en pression de la jonction tubulaire.

Le contact de l'insert de verrouillage 62 selon l'invention avec le creux de raccordement 48, via la dent de butée 76, permet un accrochage efficace. Le nombre d'inserts de verrouillage pour une force d'accrochage donnée peut donc être faible, ce qui permet de réduire le cout de fabrication fde la garniture d'étanchéité.

Pour tous les jeux admis entre les surfaces 20 et 44, l'insert de verrouillage 20 s'applique, en vue méridienne, contre le creux de raccordement 48 selon un contact en un seul point.

Ainsi, les tolérances de fabrication de l'insert et des surfaces du bout uni et du bout à emboîtement peuvent être importantes et le nombre d'inserts de verrouillage faible pour une force de verrouillage donnée. Ainsi la jonction tubulaire et la garniture d'étanchéité selon l'invention sont économiques.

## Revendications

1. Assemblage étanche et verrouillé, comprenant
- un bout uni (4) d'un premier élément de canalisation,
- un bout à emboîtement (8) d'un second élément de canalisation et
- une garniture d'étanchéité (12) composite pour l'assemblage étanche et verrouillé entre le bout uni (4) et le bout à emboîtement (8),
le bout à emboîtement comprenant une gorge d'ancrage (32) délimitée par une surface de fond (44) et par une surface frontale (40), et
la garniture d'étanchéité composite comprenant
- un anneau (60) en matière élastique s'étendant selon un axe central (X-X), ayant un corps de garniture (64) et un talon d'ancrage (66), et
- au moins un insert de verrouillage (62) pour le verrouillage de la jonction entre le bout uni (4) et le bout à emboîtement (8), et noyé au moins partiellement dans le corps de garniture (64),
l'insert de verrouillage comprenant :
- une tête (72) radialement extérieure, noyée au moins partiellement dans le corps de garniture (64) et s'étendant dans la gorge d'ancrage (32) du bout à emboîtement, et
- un pied (74) radialement intérieur, destiné à s'appliquer contre le bout uni, et comportant au moins une première dent d'accrochage (82, 84, 86) adaptée pour s'accrocher sur une surface extérieure (20) du bout uni (4), et
la tête (72) comportant une saillie radiale (78),
**caractérisée en ce que**
la gorge d'ancrage (32) est délimitée par une surface inclinée (42), la surface inclinée (42) et la surface frontale (40) formant entre elles un creux de raccordement (48) et formant entre elles un angle (γ) qui est inférieur à 180°,
**en ce que** la tête (72) comporte une dent de butée (76), adaptée pour s'appliquer sur le creux de raccordement lorsque le pied s'accroche sur la surface extérieure du bout uni, **en ce que**
la dent de butée (76) et la saillie radiale (78) sont disposées de telle sorte que, pour tout diamètre de la surface de fond (44) du bout à emboîtement et de la surface extérieure (20) du bout uni compris dans une gamme de tolérances de fabrication et suivant une vue en coupe méridienne, la dent de butée (76) de l'insert de verrouillage (62) prend appui dans le creux de raccordement.

2. Assemblage selon la revendication 1, dans lequel la dent de butée (76), selon une vue de côté, a un angle d'ouverture (α) compris entre 35° et 55°, en particulier entre 40° et 50° et de préférence entre 42 et 47°.

3. Assemblage selon la revendication 1 ou 2, dans lequel la dent de butée (76) a un rayon de courbure inférieur à 1 mm, et de préférence inférieur à 0,5 mm.

4. Assemblage selon l'une quelconque des revendications précédentes dans lequel, selon une vue de côté, la dent de butée (76), la première dent d'accrochage (82) et la saillie radiale (78) forment un angle d'accrochage (β) entre elles qui est compris entre 30° et 50°, et qui est de préférence entre 35° et 45.

5. Assemblage selon l'une quelconque des revendications précédentes, dans lequel, selon une vue de côté, la première dent d'accrochage (82), la dent de butée (76), et la saillie radiale (78) forment un angle de butée (δ) entre elles qui est compris entre 55° et 70°, et qui est de préférence compris entre 60° et 70°.

6. Assemblage selon l'une quelconque des revendications précédentes, dans lequel la dent de butée (76) et la première dent d'accrochage (82), selon une vue de côté, sont reliées par un profil convexe ou rectiligne, notamment par un profil comprenant, ou étant constitué de, deux lignes droites.

7. Assemblage selon l'une quelconque des revendications précédentes, dans lequel la dent de butée (76) et la saillie radiale (78) sont, selon une vue de côté, reliées par un profil concave ou rectiligne, notamment par un profil concave ayant une seule portion concave.

8. Assemblage selon l'une quelconque des revendications précédentes, dans laquelle le talon d'ancrage (66) est en une matière ayant une dureté supérieure à la dureté de la matière du corps de garniture (64).

9. Assemblage selon l'une des revendications précédentes, dans lequel la surface de fond (44) s'étend coaxialement par rapport à l'axe central (X-X).

10. Assemblage selon l'une des revendications précédentes, dans lequel le creux de raccordement a un rayon de courbure de l'ordre de 1 mm et de préférence inférieur à 0,5 mm.

11. Assemblage selon l'une des revendications précédentes, dans lequel la dent de butée (76) a un rayon de courbure inférieur au rayon de courbure du creux de raccordement (48).

12. Assemblage selon l'une quelconque des revendications précédentes, dans lequel la surface frontale (40) est formée par un collet d'entrée (30) du bout à emboîtement (8), la surface frontale s'étendant suivant un angle d'au moins 80° par rapport à l'axe central (X-X).

13. Assemblage selon l'une quelconque des revendications précédentes, dans lequel la surface inclinée (42), qui est disposée axialement et radialement entre la surface de fond (44) et la surface frontale (40), a une inclinaison comprise entre 30° et 60° par rapport à l'axe central (X-X).

14. Assemblage selon l'une quelconque des revendications précédentes, dans lequel pour tout diamètre de la surface de fond (44) et de la surface extérieure (20) compris dans la gamme de tolérances de fabrication, l'angle de réaction (ε), mesuré entre la ligne servant de support à la force de réaction à l'accrochage de l'insert sur le bout uni et un plan perpendiculaire à l'axe central (X-X) est situé entre 20° et 45°.

## Patentansprüche

1. Abgedichtete und verriegelte Anordnung, umfassend
- ein Zapfenende (4) eines ersten Kanalelements,
- ein Muffenende (8) eines zweiten Kanalelements und
- eine Verbundpackung (12) für die dichte und verriegelte Anordnung zwischen dem Zapfenende (4) und dem Muffenende (8),
das Muffenende umfassend eine Verankerungsnut (32), die von einer Bodenfläche (44) und einer Stirnfläche (40) begrenzt ist, und
die Verbundpackung umfassend
- einen Ring (60) aus elastischem Material, der sich entlang einer Mittelachse (X-X) erstreckt und einen Packungskörper (64) und einen Verankerungsabsatz (66) aufweist, und
- mindestens einen Verriegelungseinsatz (62) zum Verriegeln der Verbindung zwischen dem Zapfenende (4) und dem Muffenende (8), und der zumindest teilweise in den Packungskörper (64) eingebettet ist,
der Verriegelungseinsatz umfassend:
- einen radial äußeren Kopf (72), der zumindest teilweise in den Packungskörper (64) eingebettet ist und sich in die Verankerungsnut (32) des Muffenendes erstreckt, und
- einen radial inneren Fuß (74), der dazu bestimmt ist, an dem Zapfenende anzuliegen, und umfassend mindestens einen ersten Greifzahn (82, 84, 86), der angepasst ist, um an einer Außenfläche (20) des Zapfenendes (4) anzuliegen, und
der Kopf (72) umfassend einen radialen Vorsprung (78),
**dadurch gekennzeichnet, dass**
die Verankerungsnut (32) durch eine geneigte Fläche (42) begrenzt ist, wobei die geneigte Fläche (42) und die Stirnfläche (40) untereinander eine Anschlussausnehmung (48) bilden und untereinander einen Winkel (γ) einschließen, der kleiner ist als 180°,
dass der Kopf (72) einen Anschlagzahn (76) aufweist, der angepasst ist, um an der Anschlussausnehmung anzuliegen, wenn der Fuß an der Außenfläche des Zapfenendes einhakt, dass
der Anschlagzahn (76) und der radiale Vorsprung (78) angeordnet sind, sodass der Anschlagzahn (76) des Verriegelungseinsatzes (62) für jeden Durchmesser der Bodenfläche (44) des Muffenendes und der Außenfläche (20) des Zapfenendes innerhalb eines Bereichs von Fertigungstoleranzen und in einer Meridianschnittansicht in der Verbindungsausnehmung anliegt.

2. Anordnung nach Anspruch 1, wobei der Anschlagzahn (76) in einer Seitenansicht einen Öffnungswinkel (α) zwischen 35° und 55°, insbesondere zwischen 40° und 50° und vorzugsweise zwischen 42° und 47°, aufweist.

3. Anordnung nach Anspruch 1 oder 2, wobei der Anschlagzahn (76) einen Krümmungsradius von weniger als 1 mm und vorzugsweise weniger als 0,5 mm aufweist.

4. Anordnung nach einem der vorherigen Ansprüche, wobei der Anschlagzahn (76), der erste Greifzahn (82) und der radiale Vorsprung (78) in einer Seitenansicht untereinander einen Greifwinkel (β) bilden, der zwischen 30° und 50° und vorzugsweise zwischen 35° und 45° liegt.

5. Anordnung nach einem der vorherigen Ansprüche, wobei in einer Seitenansicht der erste Greifzahn (82), der Anschlagzahn (76) und der radiale Vorsprung (78) untereinander einen Anschlagwinkel (δ) bilden, der zwischen 55° und 70° und vorzugsweise zwischen 60° und 70° liegt.

6. Anordnung nach einem der vorherigen Ansprüche, wobei der Anschlagzahn (76) und der erste Greifzahn (82) in einer Seitenansicht durch ein konvexes oder geradliniges Profil verbunden sind, insbesondere durch ein Profil, das zwei gerade Linien umfasst oder daraus besteht.

7. Anordnung nach einem der vorherigen Ansprüche, wobei der Anschlagzahn (76) und der radiale Vorsprung (78) in einer Seitenansicht durch ein konkaves oder geradliniges Profil verbunden sind, insbesondere durch ein konkaves Profil, das einen einzigen konkaven Abschnitt aufweist.

8. Anordnung nach einem der vorherigen Ansprüche, wobei der Verankerungsabsatz (66) aus einem Material mit einer Härte ist, die größer ist als die Härte des Materials des Packungskörpers (64).

9. Anordnung nach einem der vorherigen Ansprüche, wobei sich die Bodenfläche (44) koaxial zu der Mittelachse (X-X) erstreckt.

10. Anordnung nach einem der vorherigen Ansprüche, wobei die Anschlussausnehmung einen Krümmungsradius von etwa 1 mm und vorzugsweise weniger als 0,5 mm aufweist.

11. Anordnung nach einem der vorherigen Ansprüche, wobei der Anschlagzahn (76) einen Krümmungsradius aufweist, der kleiner ist als der Krümmungsradius der Anschlussausnehmung (48).

12. Anordnung nach einem der vorherigen Ansprüche, wobei die Stirnfläche (40) durch einen Eintrittsbund (30) des Muffenendes (8) gebildet ist, wobei sich die Stirnfläche in einem Winkel von mindestens 80° zu der Mittelachse (X-X) erstreckt.

13. Anordnung nach einem der vorherigen Ansprüche, wobei die geneigte Fläche (42), die axial und radial zwischen der Bodenfläche (44) und der Stirnfläche (40) angeordnet ist, eine Neigung zwischen 30° und 60° in Bezug auf die Mittelachse (X-X) aufweist.

14. Anordnung nach einem der vorherigen Ansprüche, wobei für jeden Durchmesser der Bodenfläche (44) und der Außenfläche (20) innerhalb der Fertigungstoleranzen der Reaktionswinkel (ε), gemessen zwischen der Linie, die als Stütze für die Reaktionskraft beim Einhaken des Einsatzes an dem Zapfenende dient, und einer Ebene senkrecht zu der Mittelachse (X-X), zwischen 20° und 45° liegt.

## Claims

1. A sealed and locked assembly, comprising
- a spigot end (4) of a first pipe member,
- a socket end (8), of a second pipe member and
- a composite sealing gasket (12) for the sealed and locked assembly between the spigot end (4) and the socket end (8),
the socket end comprising an anchoring groove (32) delimited by a bottom surface (44) and a front surface (40), and
the composite sealing gasket comprising
- a ring (60) of elastic material extending according to a central axis (X-X), having a gasket body (64) and an anchor bead (66), and
- at least one locking insert (62) for locking the joint between the spigot end (4) and the socket end (8), and at least partially embedded in the gasket body (64),
the locking insert comprising:
- a radial outer head (72) at least partially embedded in the gasket body (64) and extending into the anchoring groove (32) of the socket end, and
- a radial inner foot (74) intended to press against the spigot end and including at least a first engagement tooth (82, 84, 86) adapted to grip an outer surface (20) of the spigot end (4), and
the head (72) including a radial projection (78),
**characterized in that**
the anchoring groove (32) is delimited by an inclined surface (42), the inclined surface (42) and the end surface (40) forming a connection recess (48) between them and forming an angle (γ) between them which is less than 180°,
**in that** the head (72) includes a stopping tooth (76), adapted to press into the connection recess when the foot grips the outer surface of the spigot end, **in that**
the stopping tooth (76) and the radial projection (78) are arranged such that, for any diameter of the bottom surface (44) of the socket end and of the outer surface (20) of the spigot end within a range of manufacturing tolerances and in a meridian cross-sectional view, the stopping tooth (76) of the locking insert (62) is supported in the connecting recess.

2. The assembly according to claim 1, wherein the stopping tooth (76), according to a side view, has an opening angle (α) between 35° and 55°, in particular between 40° and 50° and preferably between 42° and 47°.

3. The assembly according to claim 1 or 2, wherein the stopping tooth (76) has a radius of curvature of less than 1 mm, and preferably less than 0.5 mm.

4. The assembly according to any one of the preceding claims wherein, according to a side view, the stopping tooth (76), the first engagement tooth (82) and the radial projection (78) form an engagement angle (β) between them that is between 30° and 50° and is preferably between 35° and 45.

5. The assembly according to any one of the preceding claims, wherein, according to a side view, the first engagement tooth (82), the stopping tooth (76), and the radial projection (78) form an abutment angle (δ) between them that is between 55° and 70° and is preferably between 60° and 70°.

6. The assembly according to any one of the preceding claims, wherein the stopping tooth (76) and the first engagement tooth (82), according to a side view, are connected by a convex or straight profile, in particular by a profile comprising, or consisting of, two straight lines.

7. The assembly according to any one of the preceding claims, wherein the stopping tooth (76) and the radial projection (78) are, according to a side view, connected by a concave or straight profile, in particular by a concave profile having a single concave portion.

8. The assembly according to any one of the preceding claims, wherein the anchor bead (66) is made of a material having a hardness greater than the hardness of the material of the gasket body (64).

9. The assembly of any of the preceding claims, wherein
the bottom surface (44) extends coaxially relative to the central axis (X-X).

10. The assembly according to any of the preceding claims, wherein the connection recess has a radius of curvature of about 1 mm and preferably less than 0.5 mm.

11. The assembly according to any of the preceding claims, wherein the stopping tooth (76) has a radius of curvature less than the radius of curvature of the connection recess (48).

12. The assembly according to any one of the preceding claims, wherein the front surface (40) is formed by an entry collar (30) of the socket end (8), the front surface extending at an angle of at least 80° relative to the central axis (X-X).

13. The assembly according to any one of the preceding claims, wherein the inclined surface (42), which is axially and radially arranged between the bottom surface (44) and the front surface (40), has an inclination of between 30° and 60° relative to the central axis (X-X).

14. The assembly according to any one of the preceding claims, wherein for any diameter of the bottom surface (44) and the outer surface (20) within the range of manufacturing tolerances, the reaction angle (ε), measured between the line serving as a support for the reaction force to the of the insert on the spigot end and a plane perpendicular to the central axis (X-X) is between 20° and 45°.
